# EUROPEAN PATENT APPLICATION

(11) **EP 1 538 506 A2**
(43) Date of publication of application: **08.06.2005**
(21) Application number: 03104558.6
(22) Date of filing: 05.12.2003
(51) Int. Cl.: G06F 1/00, G06F 17/30

(54) **Security system based on rules and selection criteria**

(71) Applicant: QUADRAT, 2640 Mortsel (BE)
(72) Inventor: Loukipoudis, Evgueni c/o Quadrat, 2640, Mortsel (BE); Robben, Bert c/o Quadrat, 2640, Mortsel (BE); Neyrinck Piet c/o Quadrat, Septestraat 27 B-2640 Mortsel (BE); Van den Abeele Kurt c/o Quadrat, Septestraat 27 B-2640 Mortsel (BE); Jooris Serge c/o Quadrat, Septestraat 27 B-2640 Mortsel (BE); Vuyge Nico c/o Quadrat, Septestraat 27 B-2640 Mortsel (BE)
(74) Representative: De Niel, Marc Alfons Jozef

(57) **Abstract**

A system and a method are described for accessing, according to selection criteria and security rules, secure information from a set of secret data, mainly in a medical system for patient data. A performance problem arises when applying the security rules first, followed by the selection criteria. A solution is to perform the selection step first, followed by application of the security rules. The method may be used in a computer or server system e.g. for scheduling examinations of patients in a radiology department or for documentation purposes of these examinations.

## Description

### FIELD OF THE INVENTION

The present invention relates to a method for extracting secure information from a set of secret data, according to selection criteria.

### BACKGROUND OF THE INVENTION

In a medical environment, access control to patient data is an important aspect. In addition, the detailed privacy requirements are complex, dependent on region and customer and can change over time.

Therefore, an expressive security subsystem is required in order to implement medical applications in an economical way.

### SUMMARY OF THE INVENTION

The above-mentioned aspects are realised by a method having the specific features set out in claim 1 and by a system having the specific features set out in claim 10. Specific features for preferred embodiments of the invention are set out in the dependent claims.

The method for accessing may be seen as being equivalent to a method for access control of confidential data. Security rules are also referred to as authorisation rules. According to the invention, a set of patients may be selected, based upon selection criteria. However, this set of patients may contain a subset, to which the operator must not have access. This subset may then be removed from the set by the security or authorisation rules.

Preferably, all these operations are done on a computer system, which may comprise one or more servers and/or one or more clients. The method according to the current invention may also be performed via web access. The user works at his workstation and may have access to patient data in one or more databases, accessible via a LAN or WAN network or via the internet.

Selection criteria, secure information, secret data and/or security rules may be stored in a computer memory RAM or ROM, on hard disk, a compact disk or any other suitable medium for e.g. electronically storing information. The steps of the method according to the invention may be performed all by one computer, or some steps may be performed by a server and other steps may be performed by a client, separate from a server.

An example of a selection criterion is "all patients who visited this department today". Another example is "all patients treated by physician X".

After or by application of the method according to the current invention, the secure information is usually displayed on a computer screen for the user. Alternatively, the secure information may be sent to a printer or sent by e-mail or via a web-link to the general practitioner of the patient. This secure information may be presented in a template, which is suitable for all patients of a specific hospital department.

Secret data comprise data related to the patient. Some of these data are highly confidential, and must be disclosed to just one person or a limited group of persons only, sometimes even with the exclusion of the patient himself, e.g. in case of a lethal diagnosis, which is for less than 100% correct.

The security rules are in principle rules that define which operations may be done on which data by which person. Operations or "access" include creating, selecting, extracting, deleting, modifying, updating and viewing. This list is not exhaustive. Actions can be added by the applications programmer or the Information Technology Department in the hospital. Such actions are, for example: printing, scanning, e-mailing, access via the web, internet or intranet, listening to a human or machine spoken report, entering a spoken report, etc. The data may be single data elements, such as birth date, sex, name, and one report. These data may also be arranged in a set, e.g. administrative data, medical data, nursing data and psychosocial and family data. Each set may comprise several sub-groups, in which single data elements are arranged. The person who has a certain type of access to data, may be a physician, a nurse, administrative staff, etc. For each specific user, e.g. physician or nurse, the system could define whether that physician has access to a specific single data element, a specific set, or a specific sub-group. Preferably however, users may be arranged in groups, e.g. "the physicians of the radiology department" or "the nurses of the maternity department", or a specific user may even be indicated "by reference", e.g. "the head of the radiology department". This arrangement has the advantage that specific names of users may be entered in the group, and if the composition of the group is changed, it is sufficient to change the names within that group, to keep the security system consistent. The "group" may be seen as an attribute of the user. E.g. a specific physician may be considered as the head of the radiology department, a member of the cardiology staff, and a nurse of the intensive care department. It is even possible that specific patients, e.g. very important persons or persons employed by the hospital or department, need a specific security treatment, such that for example only the head of the department, or one single physician of the hospital has access to the data of that specific patient.

In a preferred embodiment, the computer system first applies the selection criteria on the secret data e.g. in the usually huge database, and once this selection is made, usually resulting in a restricted set of data, the security rules are applied on the selected information to limit the access of the user, or operator of the method according to the invention, to what he is really allowed to.

Overruling may be done in life critical situations of a patient. In such case, the operator or user of the system may have access to all or almost all data of the hospital database system or even to (almost) all database systems, which may be distributed all over the hospital or even over hospitals within a group of co-operating hospitals. However, if the user overrules the security or authorisation rules, it may be important to keep track of this fact, and to store why the rules had to be overruled by which specific person or user or operator of the system. This may be done by logging of this overruling operation. Logging may even be done for all operations, or access modes, or for a selection of "critical" accesses.

Preferably, an operator has the right to set and to change the security or authorisation rules for individual users, user groups, individual patients, patient groups, specific operations or access modes or sets of access modes. A patient group may be created by entering the patients in a group, or by assigning to each or some patients an attribute, which appoints that patient to belong to that specific group.

Advantages and embodiments of the present invention will become apparent from the following description and drawing.

### BRIEF DESCRIPTION OF THE DRAWINGS

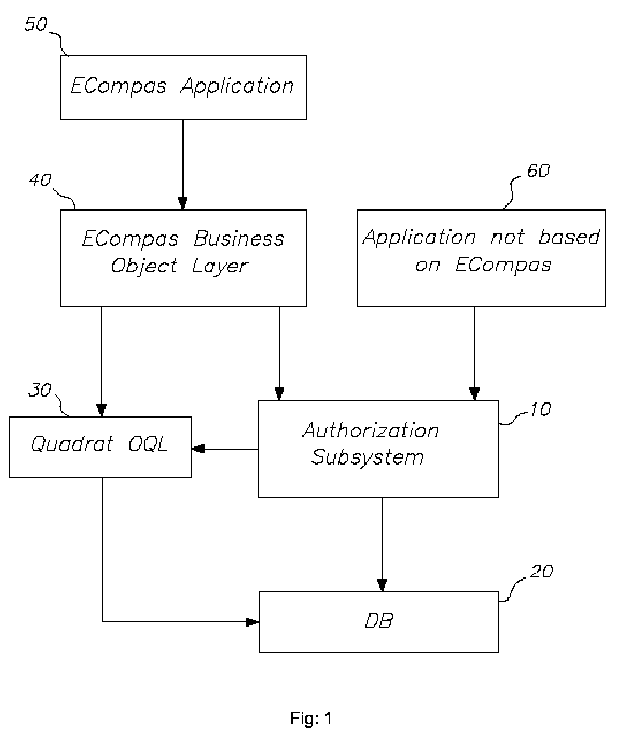

Fig. 1 shows a system for implementation of a method according to the invention, i.e. an authorisation architecture.

### DETAILED DESCRIPTION OF THE INVENTION

While the present invention will hereinafter be described in connection with preferred embodiments thereof, it will be understood that it is not intended to limit the invention to those embodiments.

According to the invention, authorisation or security rules are preferably based on the affiliation of an authorised person to specific personal information, wherein the person is preferably a patient. In a preferred embodiment, an "affiliation" relates to the following concepts:
1. the individual user (or group of users) of the system, preferably identified by a login name and preferably authorised by a password.
2. The role, performed by that user. That role may be:
   - Operator ;
   - Doctor, physician, ... ;
   - Nurse ;
   - Administrator ;
3. The department for which that user has that role, such as:
   - Radiology;
   - Cardiology;
   - Pharmacology.

In a medical environment, the personal information may relate to a patient, whereas an authorised person may be:
1. The physician associated or affiliated to the patient;
2. A nurse affiliated to the patient, by virtue of the nurse working in the department where the patient is hospitalised ;
3. A medical doctor, who advised the patient to visit the affiliated physician.

For a medical environment, we will refer to personal information as patient information. The patient information may comprise:
1. Identification information, such as name, date of birth, social security number, etc.
2. Health information, such as sex, length, weight, etc.
3. Physical parameters such as blood pressure, pulse frequency etc.
4. Disease information such as pathologic or traumatologic information.

Patient information may also been classified in the following classes:
1. Demographic data such as date of birth and name ;
2. Report data, e.g. data generated by a radiologist reporting on medical images;
3. Lab results such as the composition of a blood sample ;
4. Image data such as a CT-scan.

An information element is the smallest piece of independent information. Examples of independent information are:
1. The social security number;
2. The name and surname of the patient;
3. The address, composed of street, number, town, country of the patient;
4. The type the disease, e.g. a mallet fracture at the knuckle-bone of the smallest finger of the right hand ;
5. A dictate, e.g. a spoken report by a radiologist;
6. An appointment;
7. A medical report ;
8. An order for an examination ;
9. Results of a laboratory ;
10. Time constraints e.g. the time window when a patient is available.

Some elements may have a time relation. The blood pressure, the body temperature, the length and weight of the patient, past diseases or surgical events, vaccinations are parameters that may need an associated time or time period, with an accuracy of e.g. one month up to one second.

In principle each piece of personal information, referred to as information element, has to be affiliated to each specific authorised person, before that authorised person can access that information element. Not only the information element as such may be confidential information. Also the relation to other information elements may be confidential. For example, the information that a patient, having a specific type of pneumonia, is located in a specific hospital department, may be confidential. The relation between this type of pneumonia and a unique identifier of the patient may be more confidential than the previous information.

In order to increase the efficiency of an authorisation or security system according to the current invention, patients may be arranged in groups referring to a specific hospital department or hospital service, e.g. the patients hospitalised in the maternity department in the Erasmus hospital in Antwerp Belgium.

Also authorised persons may be grouped according to their common authorisations. For example, all physicians associated to the maternity department may be grouped in the group "maternity physicians".

The affiliation between a specific patient at the maternity department with a specific physician at this department, may then be derived from a more general combination of:
1. the maternity department
2. the physician.

The authorisation rules are thus preferably based on the affiliation.

A system according to the current invention may have the following properties.

Security rules are preferably specified at the conceptual level, rather than at the database level. Objects or "business" objects may e.g. be: physician, transfer, service request, report. A rule being specified at conceptual level, uses the "object" to define what is allowed and what is not allowed. A specification at database level would mean that the user has access to specific columns within the database, and has no access to other specific columns in the database. If a database or a database model has the object "report", but that report has not the attribute "validated", or other attributes, then the system may only state that a specific user has access to reports, and another specific user has no access to reports. In a system, where the object "report" has the attribute "validated", the system can allow access for a specific user to "all reports" and for another specific user to "validated reports" only. Another typical attribute for a report is the "creation date". Also this attribute may be used as a selection criterion or as an authorisation criterion. For example, a nurse could get access only to the reports created at the current day. Employees of the radiology department may be denied access to radiology reports that are older than 1 week. It is advantageous to specify the authorisation or security rules in terms of attributes. This gives a more flexible system than that where a user can be denied access to a specific column or table in the patient database only for all records in that table. For example, compare the system that supports rules such as
Rule A: "Nurses can only have access to validated reports of their own department" with a system that only can say:
Rule B: "Nurses don't have access to reports".

The system having the capability of Rule B only, is more restrictive, has less capabilities, than the system having the option of defining Rule A. The option of Rule A may be made possible by the fact that the rules may have access to attributes, such as the attribute "Report.department" and " Nurse.department" or the cognition of "MY_DEPARTMENT", for testing: Report.department = MY_DEPARTMENT

The value of "MY_DEPARTMENT" may depend on the person or user or operator who logged in, in the system. For example, during logging in, into the computer system, the user may specify his identification, his password, the department for which he logs in, thereby e.g. defining " MY_DEPARTMENT" and the role the user has in that department, e.g. " nurse", "physician", "head of the department", etc.

The secret data may contain information about objects. An object corresponds to an object or person in reality, and may contain information about its state, referred to as attributes.

Examples of objects are: a patient, a physician, a hospital, a department, a report, and an appointment. Attributes for the object "patient" may be: sex, name, birth day. Relations may exist between objects. For example, the object "patient" may have a relation to his "physician".

The relation between the object that needs access control and the user or group or facility subjects may be explicitly specified.

Security rules can be added using attributes of the object and any relationships it has with other objects. Example: the object "report" may have an attribute "validated" which may be "true" or "false". Report.validated := TRUE
Report.validated := FALSE

A specific rule may check this attribute for this object as follows:
Report.validated = TRUE

Security rules can be specified per instance, e.g. individual protection for a single report instead of restrictions that apply to all reports.

The security rules may be overruled in life critical situations. In this case all operations are preferably logged to provide an audit trail. The following items may be logged:
1. the identification of the user, e.g. "user_id" ;
2. the object that has been accessed ;
3. the action performed on that object (see list below) ;
4. the time (e.g. date, hours, minutes, seconds) when that action was performed.

Security may be specified as a set of "access control rules", also referred to as "security rules" or "rules". A rule specifies whether a certain logical action can be executed on a certain object.

The system may provide a set of predefined of actions, such as:
1. All actions
2. Create
3. Select
4. Delete
5. Modify
6. View

Application developers can define additional actions when needed.

An Object Query Language ("OQL") may be used to specify to which subset of objects a rule gives access control. OQL is a query language that allows queries to be expressed in terms of the high-level conceptual object model. These queries can be targeted to very specific situations by using predefined variables such as:
1. MY_AFFILIATION
2. MY_DEPARTMENT
3. ME_AS_DOCTOR
4. MY_WORKSTATION

Additional predefined variables can be defined. Rules can be overridden depending on the user, the role the current user is in, the department of the user and the workstation on which the action is requested. In addition, rules may have a priority for defining their precedence.

According to a preferred embodiment, rules are stored in a database and can be changed by an administrator, e.g. by using Qmanager, a product developed and distributed by Quadrat Medical Software N.V. in Belgium. Preferably Qmanager uses a specific component, ECompas, developed by Quadrat Medical Software N.V. in Belgium, to ensure correct application of authorisation rules.

An example of the rule: "physicians can only see their own patients" would be:
Action: "View", OQL: "Patient.MyPhysician is ME_AS_DOCTOR".
A rule, such as a security rule or an authorisation rule that specifies an OQL may very often be related to an object.

In the above example, as the target object is the patient, the rule may be abbreviated as below, since "patient." is implicit.
OQL: "MyPhysician is ME_AS_DOCTOR"

An embodiment of an Authorisation Architecture is presented in Fig. 1. The authorisation subsystem 10 retrieves the authorisation rules from the database 20 and uses the OQL parser 30 to process them. The authorisation subsystem 10 uses various levels of caching to improve performance. It provides an API (not shown) to query which actions are allowed on a certain object in the current context, i.e. user, department etc.

Applications 60, not based on ECompas 40, 50, can directly use the authorisation subsystem 10, without ECompas 40, 50. Authorisation checks are implemented by inserting calls to the authorisation subsystem 10 at appropriate places in the code. These applications 60 also have to provide the correct values for MY_ AFFILIATION etc.

In emergency cases, applications 60 can override the access restrictions but they have to implement all audit logging themselves.

Applications 50 developed on top of the ECompas platform 40 can also insert these checks explicitly but can rely on the business object layer 40 for the majority of authorisation cases, e.g. select, create, update, delete actions.

When an application 50 performs an action on an object or a "business" object, the corresponding OQL rules 30 are evaluated to check the whether the action is allowed or not in the current user context. If not, the operation is aborted and an exception is thrown.

When an ECompas application 50 performs a query, e.g. written in OQL, the results are returned as a list of objects. After retrieval of this list, ECompas 50 checks each element of the list for access control. Only the objects to which access is granted are included. The other objects are omitted and as such not visible to the application 50, and are thus not accessible to the user.

ECompas also provides an XML view of an object graph. Objects for which there is no "select" access will have no detail information or attributes exported to this XML document. These attributes are tagged with a security message that explains that access is denied.

Overriding access control coupled with automatic logging to an audit trail for critical situations is also possible.

Having described in detail preferred embodiments of the current invention, it will now be apparent to those skilled in the art that numerous modifications can be made therein without departing from the scope of the invention as defined in the appending claims.

## Claims

1. A method for accessing, according to selection criteria, secure information from a set of electronically stored secret data, comprising the following steps:
defining a set of security rules ;
selecting information from said secret data according to said selection criteria ;
accessing said secure information from said selected information according to said security rules.

2. The method according to claim 1, wherein accessing is selected from the group comprising:
- creating ;
- selecting ;
- extracting ;
- deleting ;
- modifying ;
- updating ; and
- viewing.

3. The method according to any one of the previous claims, wherein the secret data comprises records, each record comprising data or attributes relating to demographic data, a report, lab tests or image data for a patient.

4. The method according to the preceding claim, wherein the security rules are based on
- privacy requirements for said patient ; or,
- access control for said patient.

5. The method according to any one of the preceding claim, wherein the security rules are based on:
- a relation between an operator of the method and the secure information ; or,
- attributes of said operator.

6. The method according to any one of the preceding claim, wherein the security rules are specified at conceptual level.

7. The method according to any one of the preceding claims, comprising the step of overruling at least one of said set of security rules, preferably depending on an operator or an attribute such as a department or workstation for said operator.

8. The method according to any one of the preceding claims, comprising the step of logging the step of accessing said secure information.

9. The method according to any one of the preceding claims, comprising the step of changing said security rules by an administrator.

10. A security system for accessing secure information, according to selection criteria, from a set of electronically stored secret data, comprising:
means for defining a set of security rules ;
means for selecting information from said secret data according to said selection criteria ;
means for accessing said secure information from said selected information according to said security rules.
